# EUROPEAN PATENT APPLICATION

(11) **EP 4 715 249 A1**
(43) Date of publication of application: **25.03.2026**
(21) Application number: 24202103.8
(22) Date of filing: 24.09.2024
(51) Int. Cl.: F16L 59/065, F16L 59/14

(54) **HIGH TENSILE CAPACITY VACUUM INSULATED TUBING**

(71) Applicant: Vallourec Tube-Alloy, LLC, Houston, TX 77042 (US)
(72) Inventor: DUFRENE, Corey, 92190 MEUDON (FR); ROUSSIE, Gabriel, 92190 MEUDON (FR); PERKINS, Justin, 92190 MEUDON (FR); HENRY, Joey, 92190 MEUDON (FR)
(74) Representative: Leveille, Romain

(57) **Abstract**

The invention is an insulated tubular assembly 1 made of multiple insulated tubing segments aligned along axis A. Each segment has two ends E1, E2, an inner tube 11,12 creating a fluid passageway F, and an outer tube 21,22 forming a vacuumed space 5 with the inner tube. The corresponding ends are connected by a spool 301,302 with male 3a and female 3b components joined by threads 3a1, 3b1. The assembly is sealed by welds W1-W4 connecting the inner and outer tube ends to the spool components 3a, 3b, enclosing the vacuumed space 5. The axial distance d1 between the secondary weld W2 and the fourth weld W4 being shorter than the axial distance d2 between the primary weld W1 and the third weld W3.

## Description

### FIELD OF INVENTION

The present invention relates to the field of vacuum insulated tubing for use in oil and gas wells or geothermal wells.

Specifically, this invention pertains to the area of deep well constructions that employ double-walled tubing capable of withstanding high tensile loads at, or in proximity to, the surface.

### BACKGROUND OF INVENTION

In the field of oil and gas exploration and production, it is often necessary to drill deep geothermal wells in high pressure environments, i.e. having a pressure above 103 MPa or a temperature above 177° C. These extreme conditions pose significant technical challenges for the design and operation of wells, especially regarding the management of annular pressure.

The annular pressure is the pressure that exists in the space between two concentric casings or between a casing and the wellbore wall. When the temperature of the production fluid increases during the production phase, the annular pressure can also increase due to the thermal expansion of the fluid and the metal. This phenomenon is called annular pressure buildup (APB) and can cause the casing to fail under the effect of compression or bending load.

To mitigate the APB, there are different possible solutions, including vacuum insulated tubing (VIT). The VIT is a device that consists of a tube within a tube, with a vacuum space between the two tubes, which reduces the heat transfer from the production fluid to the annulus in geothermal wells. The VIT thus limits the increase of the annular pressure and prevents the deformation or rupture of the casing.

The concept of the VIT is not new and has been used in various oil and geothermal applications for several decades. However, the existing VITs have limitations and drawbacks that reduce their tensile efficiency and reliability, especially in HP wells.

Facing these problems, several patents and publications have proposed improvements of the VIT to enhance its ability to withstand the difficult conditions. Among these documents, one can mention the patent application US20200393065A1, filed by Chevron U.S.A. Inc., which discloses a VIT for mitigating the APB in a deepwater HPHT well. The VIT according to this patent application comprises inner and outer tubes made of 15Cr-135 martensitic stainless steel, having a vacuum space between them, and a weld made of high tensile strength alloy to join the inner and outer tubes. A protective layer made of corrosion resistant alloy is placed on the weld. The weld and the protective layer are formed so as not to extend into the inner bore. This patent application also describes a method for forming the VIT, as well as a system and a method for using the VIT. Several VITs are connected by threaded couplings to form an elongated device that can be placed inside a casing in a well to transport the fluids from the deepwater well to a surface location. When exposed to the HPHT conditions of the well, the vacuum in the VIT is not lost.

Nevertheless, the thermal efficiency of this prior art Vacuum Insulated Tubing (VIT) could be enhanced as done in the invention. Additionally, the tensile integrity of the VIT largely hinges on the quality of the connections and welds implemented, with the weakest link determining the potential point of failure. Balancing tensile loads is a challenging aspect of VIT design. Consequently, an improved design and manufacturing approach to the VIT is necessitated to bolster its robustness and longevity in high-pressure (HP) well environments.

Another prior art known in the field of insulated tubes is the one disclosed by the document WO2023110731A1, filed by Vallourec Tube Alloy, LLC. This document describes an insulated tube comprising a main body and an end piece, the end piece being attached to the main body, the main body comprising an inner tube and an outer tube, a radial space being disposed between the inner tube and the outer tube, one of either the outer tube and the inner tube being a cold-hardened steel alloy tube, said cold-hardened steel alloy tube having a first threaded portion and the end piece having a second threaded portion, the first threaded portion and the second threaded portion being screwed together such that the end piece is attached to the cold-hardened steel alloy tube in a sealed manner due to the cooperation between said first threaded portion and the second threaded portion. The document indicates that this insulated tube allows to withstand high pressures encountered in high pressure and high temperature (HPHT) wells, without collapsing and without losing the vacuum in the radial space.

However, while this prior art focuses on the material used to enhance corrosion resistance, there is potential for further improvements in thermal efficiency and tensile behavior as previously mentioned. Exploring these aspects could present interesting alternatives that may enhance the overall performance characteristics.

### SUMMARY

To improve the thermal efficiency as well as the tensile performances, the present invention relates to an insulated tubular assembly made of several sequentially joined insulated tubing segments aligned along an axis, with each tubing segment comprising:
- two opposing ends,
- an inner tube defining a passageway for fluid flow, each inner tube comprising first and second inner tube ends,
- an outer tube arranged concentrically around the inner tube, forming a vacuumed space between said inner and outer tubes, each outer tube comprising first and second outer tube ends,

the opposing ends being connected by a spool comprising a male component with an external thread threadedly engaged with a female component comprising a matching internal thread, the insulated tubular assembly being such that:
   - the male component is connected on one side by a primary weld to the first inner tube end and on the other side by a secondary weld to the first outer tube end, sealing the vacuumed space,
   - the female component is connected on one side by a third weld to the second inner tube end and on the other side by a fourth weld to the second outer tube end, sealing the vacuumed space,
the axial distance between the secondary weld and the fourth weld being shorter than the axial distance between the primary weld and the third weld.

One of the advantages of the insulated tubular assembly according to the invention is that it does not require any weld between the inner and outer tubes, unlike some prior art solutions.

This simplifies the manufacturing and assembling process while reducing the risk of leaks or damages. Moreover, the inner and outer tubes do not need to be threaded, which is another complex and costly operation.

Instead, they are directly welded to the spool, which has a male component and a female component with matching threads. The inner and outer tubes can be cut to the desired length and used without wasting any material.

In addition, according to the invention, the insulated tubular assembly is such that the axial distance between the secondary weld and the fourth weld is shorter than the axial length of the external or internal thread. This improves thermal efficiency of the VIT according to the invention.

Furthermore, the ends of the inner and outer tubes can be positioned as close as possible to each other, creating a minimal gap between them. Specifically, the axial distance between the secondary and fourth welds is shorter than that between the primary and third welds. The goal is to position the outer pipe welds closer together at the VIT ends. This reduces the unvacuumed space and improves the thermal insulation performance of the assembly.

Specifically, the length of the un-insulated section is minimized, and the design according to the invention significantly enhances the distribution of tension forces.

Other embodiments may be utilized, structural, and logical changes may also be made to these embodiments. The various embodiments are not necessarily mutually exclusive, as some embodiments can be combined with one or more other embodiments to form new embodiments. These embodiments are detailed here below:
The present invention also relates to an insulated tubular assembly wherein the spool and the inner tube have substantially equal inner diameters.

One advantage of this configuration is that it provides an insulated tubular assembly with an inner flush configuration, meaning that the inner tube and the spool have substantially equal inner diameters. This improves the fluid flow inside the vacuum insulated tubing (VIT) by minimizing the turbulence caused by the presence of the spool. Moreover, this reduces the risk of erosion and corrosion of the inner tube end and the spool due to the fluid friction and the potential formation of deposits. Thus, the inner flush configuration enhances the reliability and durability of the VIT and extends its service life.

In a preferred embodiment, the insulated tubular assembly according to the invention is such that the spool has a maximal outer diameter substantially equal to the outer tube inner diameter.

The advantage of this configuration is that it allows to weld the spool to the inner surface of the outer tube, thereby improving the vacuum integrity of the insulated tubular assembly. Furthermore, this configuration allows minimizing the distance between the welds of the adjacent outer tubes, which reduces the unvacuumed area along the insulated tubular assembly. Hence, this configuration enhances the thermal performance.

In one embodiment, the male component of the spool has an external surface comprising the following successive parts:
a first male frustoconical part with expanding diameter,
a first male cylindrical part,
a first male abutment surface,
a second male cylindrical part
a male threaded tapered part with decreasing diameter and comprising the external thread,
a second male abutment surface,

This male component's external surface offers multiple benefits for the insulated tubular assembly.

Firstly, its frustoconical shape with an expanding diameter minimizes the gap between the welds inside the outer tube, effectively reducing any space that is not vacuum sealed thus enhancing thermal performance. The design of the cone angle specifically aims to decrease this spacing.

Secondly, the male cylindrical part simplifies the process of aligning with the inner diameter of the outer tube before welding. The first male abutment surface acts as a stop during the makeup process signaled by rise in makeup torque and indicating that the makeup is complete.

Lastly, the tapered threaded portion on the male part extends the threading area which maximizes the tensile strength of the assembly.

Preferably, the first male abutment surface is perpendicular to the axis A of the insulated tubular assembly. This improves the compression resistance.

In a preferred embodiment, the secondary weld joins the first outer tube end to the first male cylindrical part. This improves the vacuum integrity of the insulated tubular assembly.

Alternatively, the insulated tubular assembly according to the invention features a female component that comprises a cylindrical external part and an internal surface comprising the following successive parts:
a first female abutment surface proximal to the female cylindrical external part,
a first inner female cylindrical part forming a tubular shape with the female cylindrical external part and the first female abutment surface,
a female tapered part with decreasing diameter supporting the internal thread,
a second female abutment surface,

The external surface of this female component enhances the insulated tubular assembly in several ways.

Firstly, the cylindrical external part simplifies the process of aligning with the inner diameter of the outer tube before welding.

Secondly, the presence of a first female abutment surface against a corresponding male surface halts the make-up process at the right moment.

Thirdly, the female threaded tapered part increases the threading range, thus improving the assembly's tensile strength.

Notably, the second female abutment surface is designed not to meet the male component surface after make-up completion.

In a preferred embodiment, the first female abutment surface is perpendicular to the axis A of the insulated tubular assembly and faces the first male abutment surface in made-up state. This improves the compression resistance.

In another preferred embodiment, the insulated tubular assembly according to the invention features a fourth weld that joins the second outer tube end to the female cylindrical external part. This improves the vacuum integrity of the insulated tubular assembly.

Alternatively, the insulated tubular assembly according to the invention has a configuration wherein each of the external thread and the internal thread taper to create a clockwise taper angle θ from 1 to 5 degrees with the axis (A), preferably between 2 and 4 degrees, and most optimally between 3 and 4 degrees.

The advantage of having a taper angle θ in the ranges above with the axis A is that it increases the amount of thread surface, notably the thread surface engaged with the load flank area, thus maximizing the tensile capacity of the insulated tubular assembly. This means that the assembly can withstand higher axial loads without compromising its vacuum integrity or thermal insulation performance.

In another preferred embodiment each of the external thread and the internal thread comprises a stab flank with an anti-clockwise angle β ranging from 40° to 60°, preferably between 45° and 55°, and most optimally between 48° and 53°, relative to a perpendicular to the axis A.

One of the benefits of having a stab flank angle β in the ranges above is that it improves the threading speed and ease of machining of the threads. This is because such an angle reduces the friction between the mating threads and allows for a smoother engagement and disengagement of the tubular components.

According to one embodiment, each of the external thread and the internal thread comprises a load flank with a clockwise angle α ranging from 1° to 8°, preferably between 2° and 6° and most optimally between 3° and 5°, with reference to a perpendicular to the axis A.

Having a load flank angle α in the specified ranges improves repairability in case of fabrication defects, leading to shorter recut lengths and thus better thermal insulation. This optimizes the process while achieving high insulation levels.

In another preferred embodiment, each of the external thread and the internal thread has 5 to 10 threads per inch, with a preferable range being 6 to 8 threads per inch.

This thread per inch range increases the amount of thread surface, notably the thread surface engaged with the load flank area, thus maximizing the tensile capacity of the insulated tubular assembly. This means that the assembly can withstand higher axial loads without compromising its vacuum integrity or thermal insulation performance.

Preferably, the external thread has a thread crest radially positioned beyond the inner tube outer diameter.

This feature further increases the total thread length, hence the surface in contact, of the insulated tubular assembly according to the invention. This maximizes the tensile capacity of the assembly.

The present invention also relates to a process to obtain an insulated tubing segment according to the invention comprising the following successive steps:
- welding the inner tube to the male component on one side and to the female component on the other side, to obtain an inner assembly,
- inserting said inner assembly into the outer tube,
- welding the outer tube to the male component on one side and to the female component on the other side,
- pulling vacuum through a hole to create the vacuumed space (5) between said inner and outer tubes.

This process does not require threading the inner or the outer tubes, which streamlines the process. Moreover, the final assembly is done by simply engaging the threads of the male and female components of the spool, without the need to use welding machines at the final stage. This results in an insulated tubing segment according to the invention that has improved thermal performance and improved tensile capacity.

### DEFINITIONS

In the present invention, the following terms have the following meanings:
- "**Threading**" refers to the set of threads on a piece, male or female, generated by a geometric profile moving along a surface following a helical movement.
- **"Positive or negative angle(s)**": By convention, in the context of the invention, the clockwise direction, will be used. Thus, a positive angle goes in the clockwise direction and conversely a negative angle goes in the counterclockwise direction.
- "**Thread taper angle**": Within a threaded part, a portion of male or female threading seen in cross-section presents a straight segment connecting mid-heights of flanks of consecutive tooth-bearing threads, said segment forming an angle with the axis of the component comprising the threaded part. If this angle is zero, the threading portion is said to be cylindrical, thus parallel to the axis A in this invention. If the angle is non-zero, the threading part is said to be frustoconical. The angle can be expressed in degrees, radians, or percentage. The threading angle is equal to the apex angle of the cone formed by the straight segment as a generatrix rotating around the axis of the threaded part. A threading can be cylindrical, that is to say, have a generatrix parallel to the axis of the threaded end, or a threading can be frustoconical, that is to say, have a generatrix forming a non-zero angle with respect to the axis of the threaded part.
- The term "**crest**" refers to the prominent part where the two flanks (load flank and stab flank) of a thread meet. In other words, within a threaded portion, a 'crest' corresponds to the junction between the top of a load-bearing/loading flank and the top of an engagement/stabbing flank of the same tooth. The 'top' of a flank refers to the portion of the flank that is radially furthest from the longitudinal axis of the thread.
- The term "**spool**" refers to any substantially tubular-shaped connecting piece used to ensure the junction or to maintain the unity of tubes (inner or outer) whose length is greater than that of said connecting piece (spool). It's a component that connects segments of tubing or casing in a wellbore. It is designed to facilitate the handling and assembly of the tubing strings and can be used to space out full-length tubing and casing strings. In the specific application of VIT, which is used to minimize heat transfer and maintain the temperature of fluids being transported within the tubing, a spool may also refer to a part that helps to maintain the vacuum or insulating properties at the connections between tubing segments.
- By "**abutment surface**", it is meant the respective stop surfaces of two distinct tubular components or, spool male or female components in the invention, that develop a contact pressure at the level of said surfaces.
- "**Stab flank and load flank**": The spool male and female components are equipped with threaded ends. These threaded ends are complementary, allowing the connection of the male component and female component to each other. There is therefore a male component with an external thread adapted to be threadedly engaged with a female component. The engagement flanks (or 'stab flanks') are the thread surfaces capable of coming into contact when engaging the threads of male and female components into each other. They correspond to the flanks directed towards the free end of the considered spool male component in the invention. The load-bearing flanks (or 'load flanks') are the thread surfaces capable of coming into contact when the threaded joint is subjected to axial tensile forces.

### DESCRIPTION OF THE DRAWINGS

The following detailed description will be better understood when read in conjunction with the drawings. For the purpose of illustrating, the insulated tubular assembly is shown in the preferred embodiment. It should be understood, however that the application is not limited to the precise arrangements, structures, features, embodiments, and aspect shown. The drawings are not drawn to scale and are not intended to limit the scope of the claims to the embodiments depicted. Accordingly, it should be understood that where features mentioned in the appended claims are followed by reference signs, such signs are included solely for the purpose of enhancing the intelligibility of the claims and are in no way limiting on the scope of the claims.

Features and advantages of the invention will become apparent from the following description of embodiments of a system, this description being given merely by way of example and with reference to the appended drawings in which:
**Figure 1** shows a longitudinal sectional view of the insulated tubular assembly according to the invention.
**Figure 2** depicts a longitudinal sectional view of an insulated tubing segment (without the outer tubing) as per the invention.
**Figure 3** is an enlarged view of figure 1 at the joint with the spool.
**Figures 4A** and **4B** are schematic representations of, respectively, the male and female components of the spool.
**Figure 5** is a schematic representation of the spool threading on the male or female component showing the stabbing flank, the load flank, the crest, and the root.
**Figure 6** enlarges Figure 1 to show the axial distances between welds and the length of the threaded spool.

### ILLUSTRATIVE EMBODIMENTS OF THE INVENTION

The present disclosure relates generally to the insulated tubular assembly as per the invention and assembly method thereof. More particularly, it relates to an illustration of insulated tubing segment that is reproduced to form the insulated tubular assembly.

The following detailed description refers to the accompanying drawings that show, by way of illustration, a preferred embodiment of the invention. This embodiment is described in sufficient details to enable those skilled in the art to practice it. Various modifications can be made to the embodiment by those skilled in the art without departing from the true spirit and scope of the disclosure as defined by the claims. The detailed description is, therefore, not to be taken in a limiting sense.

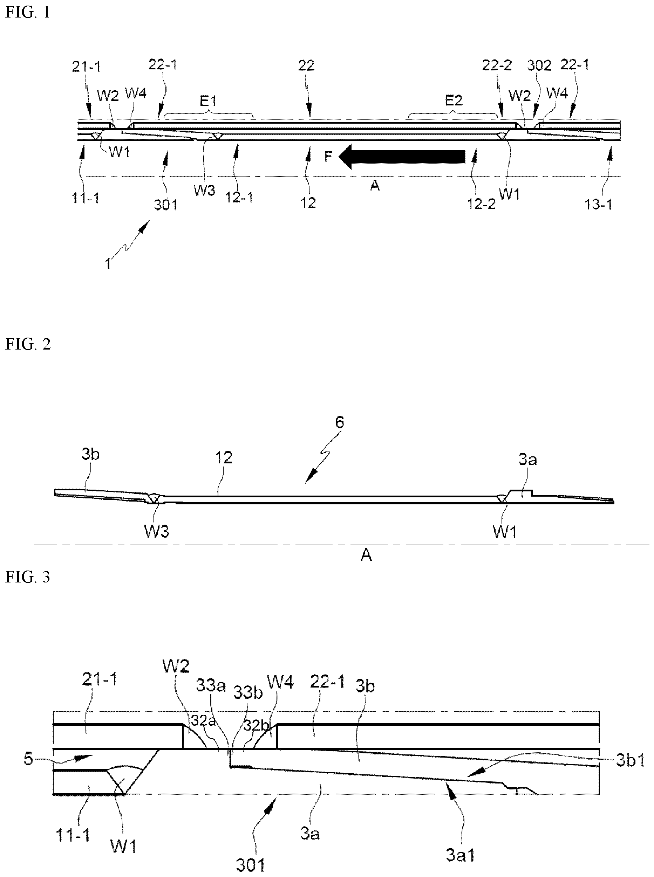

**Figure 1** shows a longitudinal section of the insulated tubular assembly as per the invention. The revolution axis of this tubular assembly is shown as A. In this embodiment, several sequentially joined insulated tubing segments are showed.

Regarding the inner tubing depicted in this figure, a fully assembled second inner tube 12 is presented. It is affixed to a first spool 301 located on the left side of Figure 1 and to a second spool 302 positioned on the right side of Figure 1 through welded connections W3 and W1, referred to as the third and primary welds, respectively. These welds, W1 and W3, connect the open ends of the second inner tube 12-1,12-2 to the free ends of the first and second spools 301 and 302.

As to the outer tubing in the same Figure 1, there is a fully assembled second outer tube 22 shown. This tube is also attached to both the first spool 301 on the left and the second spool 302 on the right of Figure 1. Like the inner tubing, the attachment is achieved through welds W4 and W2, known as the fourth and secondary welds, respectively, which join the open ends of the second outer tube 22-1,22-2 to the corresponding free ends of the first and second spools 301 and 302.

It should be recognized that two additional tubing segments are connected to those previously mentioned. Specifically, in Figure 1, on the far left one first inner tube end 11-1 is joined to the first spool 301 by another primary weld W1, and a first outer tube end 21-1 is connected to the same first spool 301 through another secondary weld W2.

On the far right, one third inner tube end 13-1 (unshown but indicated by an arrow) is joined to the second spool 302 by another third weld W3 (unshown), and a third outer tube end 23-1 is connected to the second spool 302 through another fourth weld W4.

Weld W1 and weld W3 align coaxially as they unite distinct ends of separate inner tubes, which share identical profiles with respect to inner diameter, outer diameter, and wall thickness.

Similarly, weld W2 and weld W4 align coaxially as they connect different ends of separate outer tubes, each matching in profile concerning inner diameter, outer diameter, and wall thickness.

The inner tubes 11-unshown ,12,13-unshown define a passageway F for fluid flow.

The outer tubes 21, 22, and 23, with 21 and 23 not shown, are placed concentrically around the inner tubes 11, 12, and 13, with 11 and 13 not shown, creating a vacuumed space (ref. 5 in figure 2) between the inner and outer tubes. The fluid conveyed inside the inner tubes is thus sealed from atmosphere.

It is important to ensure the gap between the second and fourth welds, W2 and W4, is minimized to reduce the unvacuumed region and enhance the thermal efficiency of the insulated tubular assembly 1 as per this invention.

**Figure 2** shows a separate tubing segment showing only an inner tube 12 that is attached at one end to the female component 3b of the spool 3 by a third weld W3, and at the other end to the male component 3a of the spool 3 by a primary weld W1. The outer tubing is not shown for the sake of clarity, but a complete tubing segment requires said outer tubing to have the vacuumed space 5. Certainly, the arrangement can be switched so that the male and female parts, 3a and 3b, are interchanged. This setup creates an individual piece that is easier to handle in a plant than an assembly. It is designed to be joined to another of its kind. In this design according to the invention, the separate tubing segments 6 are connected through threading.

**Figure 3** is an enlarged view of the spool 3 welded to a first inner tube end 11-1 and to both first outer tube end 21-1 and a second outer tube end 22-1. The third weld W3 to the second outer end 12-1 is not shown.

This figure provides a clearer view of the construction details: the first inner tube end 11-1 is welded to the male part 3a of spool 3 at its lower section, while the first outer tube end 21-1 is welded to the upper section of the same spool 3. The vacuumed space 5 is marked by the gap between the external surface of the inner tube end 11-1 and the internal surface of the first outer tube end 21-1.

Conversely, weld W4 connects the female portion 3b of the spool 3 with the second outer tube end 22-1. As mentioned before, the space between the second and fourth welds, W2 and W4, is kept as small as possible to decrease the area that is not under vacuum, thereby improving the thermal performance of the insulated tubular assembly 1 according to this invention.

Weld W4 is axially located near the end of the internal thread 3b1 on the female component 3b, proximal to the first female abutment surface 33b. This modifies significantly the flow of tensile stresses that the insulated tubular assembly according to the invention will be submitted to, allowing for more tensile loads to flow through the outer tube 22 compared with flowing through the female component 3b critical cross section.

The tapered design of the male component 3a of spool 3 to which the inner and outer tube ends 11-1,21-1 are welded contributes to achieving this enhancement.

When joined, the male component 3a and the female component 3b are designed to meet directly through the first male abutment surface 33a and the first female abutment surface 33b, both set perpendicular to the axis A of the insulated tubular assembly.

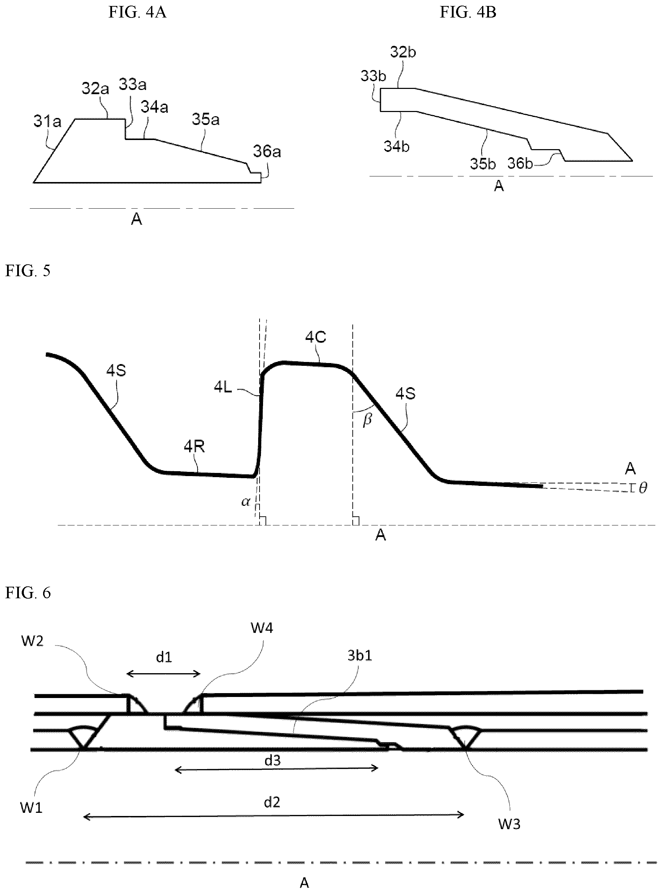

**Figures 4A** and **4B** show the profile of, respectively, the male and female components 3a and 3b of the spool 3.

**Figure 4A** illustrates the male component 3a profile. This component has an external surface with successive parts.

It comprises a first male frustoconical part 31a with expanding diameter that allows the external tubes 21,22,23 to be joined while minimizing the gap between the second and fourth welds W2, W4 for enhanced thermal performance.

Following this, is a first male cylindrical part 32a which accommodates the internal diameter of the outer tubes 21,22,23 and serves as the site for the secondary weld W2.

Subsequently, a first male abutment surface 33a provides a stopping point upon completion of the make-up process when joining the spool 3 male component 3a to the female component 3b.

Then, there is a second male cylindrical part adjacent to a male threaded tapered part 35a with a narrowing diameter featuring the external thread 3a1. This external thread 3a1 is designed to mesh with the internal thread 3b1 on the female component 3b.

Lastly, a second male abutment surface 36a is provided while not being meant to come into abutment contact with a matching surface 36b of the female component when the male component 3a and the female component 3b are interconnected.

The inner surface of the male component 3a is cylindrical. It may also comprise a shoulder on the inner surface.

In alternative non-shown embodiment, the male threaded tapered part 35a comprises vanishing threads.

**Figure 4B** illustrates the female component 3b profile. This component comprises a cylindrical external part 32b and an internal surface comprising the following successive parts:
A first female abutment surface 33b proximal to the female cylindrical external part 32b. This female abutment surface 33b extending perpendicularly regarding the axis A of the insulated tubular assembly 1.

Following this, is a first inner female cylindrical part 34b forming a tubular shape with the female cylindrical external part 32b and the first female abutment surface 33b joining the two cylindrical parts 34b and 32b. The female cylindrical external part 32b accommodates the internal diameter of the outer tubes 21,22,23 and serves as the site for the secondary weld W2

Subsequently, there is a female tapered part 35b with decreasing diameter supporting the internal thread 3b1. This internal thread 3b1 is designed to mesh with the external thread 3a1 on the male component 3b.

Lastly, a second female abutment surface 36b is provided while not being meant to come into abutment contact with a matching surface 36a of the male component when the male component 3a and the female component 3b are interconnected.

The external surface of the female component 3b is cylindrical then frustoconical with decreasing diameter from the first female abutment surface 33b to the other free end of said female component 3b.

In alternative non-shown embodiment, the female tapered part 35b could comprise a threading on a swaged portion.

**Figure 5** illustrates the male and female components 3a,3b of the spool 3 external thread 3a1, which fits with the internal thread 3b1. It shows the stabbing flank (4S), load flank (4L), crest (4C), and root (4R). Below descriptions for the external thread 3a1 also apply to the internal thread 3b1.

The figure indicates that the external thread 3a1 narrows at a clockwise taper angle θ of 3.56°, with respect to the insulated tubular assembly's axis A, enhancing the thread contact area and the tensile strength of the assembly as per the invention. The axis A of spool 3 aligns with the axis A of the insulated tubular assembly 1.

The stabbing flank 4S is set at an anti-clockwise angle β of 50° from the perpendicular to axis A, facilitating faster threading and easier machining.

The load flank 4L is angled clockwise with an angle α of 4° as measured from the perpendicular to axis A.

To maximize tensile capacity in accordance with the invention, the external thread 3a1 features 7 threads per inch, increasing the thread contact area.

The thread crest 4C generatrix and the thread root generatrix 4R are angled at a clockwise taper angle θ of 3.56° similar to the thread taper.

It is important to point out that the external thread 3a1 features a crest 4C that extends radially beyond the outer diameter of the inner tube 11,12,13. In such an arrangement where the thread profile exceeds the outer diameter of the inner tubes 11, 12, 13, this contributes to an increased overall length of the thread.

To create the insulated tubular segment as per the invention, the following steps are taken: Firstly, weld the inner tube 12 to the male component 3a at one end and to the female component 3b at the opposite end, forming the inner assembly 6.

Next, insert the inner assembly 6 into the outer tube 21,22.

After that, weld the outer tube 22 to the male component 3a on one end and to the female component 3b on the other end, which results in creating a space between the inner tube 12 and the outer tube 22.

Finally, evacuate air through a hole to form the vacuumed space 5 that corresponds to the previously mentioned space between the inner tube 12 and the outer tube 22.

**Figure 6** shows the axial distance d1 between the outer tube's secondary weld W2 and fourth weld W4, as well as the axial distance d2 between the primary weld W1 and the third weld W3. Additionally, it illustrates the axial threaded length d3. It is important to note that the internal thread 3b1 of spool 3 has an axial length d3, which is identical to the external thread 3a1 of spool 3. This improves thermal efficiency.

The distance d1 is less than the axial distance d2 separating the primary weld W1 and the third weld W3. Additionally, d1 is shorter than the spool's threaded axial length d3. This enhances thermal efficiency even further.

### REFERENCES

### LIST OF REFERENCE NUMBERS AND NAMES

5 - vacuumed space
11,12,13 - inner tube
21,22,23 - outer tube
21-1 - first outer tube end / 23-1 - third outer tube end
11-1 - first inner tube end / 13-1 - third outer tube end
12-1 & 12-2: open ends of the inner tube 12
22-1 & 22-2: open ends of the outer tube 22
W1, W2, W3 and W4: respectively the primary, secondary, third and fourth welds.
3a - male component
3b - female component
A - axis
6 - inner assembly
301, 302: spool
3a1 - external thread of the spool 3
3b1 - internal thread of the spool 3
31a - first male frustoconical part
32a - first male cylindrical part
33a - first male abutment surface
34a - a second male cylindrical part
35a - male threaded tapered part
36a - second male abutment surface
32b - female cylindrical external part
33b - first female abutment surface
34b - first inner female cylindrical part
35b - female tapered part
36b - second female abutment surface
4S,4R, 4L and 4C are respectively the stab flank, thread root, load flank, and thread crest.
d1: axial distance between W2 and W4 - outer tubes welds
d2: axial distance between W1 and W3 - inner tubes welds
d3: spool threaded axial length

## Claims

1. An insulated tubular assembly (1) made of several sequentially joined insulated tubing segments aligned along an axis (A), with each tubing segment comprising:
• two opposing ends (E1 E2),
• an inner tube (11,12) defining a passageway (F) for fluid flow, each inner tube (11,12) comprising first and second inner tube ends (11-1, 12-1),
• an outer tube (21,22) arranged concentrically around the inner tube (11,12), forming a vacuumed space (5) between said inner (11,12,) and outer tubes (21, 22), each outer tube (21,22) comprising first and second outer tube ends (21-1, 22-1),
the opposing ends (E1, E2) being connected by a spool (301,302) comprising a male component (3a) with an external thread (3a1) threadedly engaged with a female component (3b) comprising a matching internal thread (3b1), the insulated tubular assembly (1) being such that:
• the male component (3a) is connected on one side by a primary weld (W1) to the first inner tube end (11-1) and on the other side by a secondary weld (W2) to the first outer tube end (21-1), sealing the vacuumed space (5),
• the female component (3b) is connected on one side by a third weld (W3) to the second inner tube end (12-1) and on the other side by a fourth weld (W4) to the second outer tube end (22-1), sealing the vacuumed space (5),
the axial distance (d1) between the secondary weld (W2) and the fourth weld (W4) being shorter than the axial distance (d2) between the primary weld (W1) and the third weld (W3).

2. The insulated tubular assembly (1) according to claim **1**, wherein, the axial distance (d1) between the secondary weld (W2) and the fourth weld (W4) is shorter than the axial length (d3) of the external or internal thread (3a1, 3b1).

3. The insulated tubular assembly (1) according to claim **1** or claim **2**, wherein the spool (301,302) and the inner tube (11,12) have substantially equal inner diameters.

4. The insulated tubular assembly (1) according to anyone of claims **1** to **3**, wherein the spool (301,302) has a maximal outer diameter substantially equal to the outer tube (21,22) inner diameter.

5. The insulated tubular assembly (1) according to anyone of claims **1** to **4**, wherein the male component (3a) has an external surface comprising the following successive parts:
a. a first male frustoconical part (31a) with expanding diameter,
b. a first male cylindrical part (32a),
c. a first male abutment surface (33a),
d. a second male cylindrical part (34a)
e. a male threaded tapered part (35a) with decreasing diameter and comprising the external thread (3a1),
f. a second male abutment surface (36a),

6. The insulated tubular assembly (1) according to claim **5**, wherein the first male abutment surface (33a) is perpendicular to the axis A of the insulated tubular assembly (1).

7. The insulated tubular assembly (1) according to claim **5** or **6**, wherein the secondary weld (W2) joins the first outer tube end (21-1) to the first male cylindrical part (32a).

8. The insulated tubular assembly (1) according to anyone of claims **1** to **7**, wherein the female component (3b) comprises a cylindrical external part (32b) and an internal surface comprising the following successive parts:
a. a first female abutment surface (33b) proximal to the female cylindrical external part (32b),
b. a first inner female cylindrical part (34b) forming a tubular shape with the female cylindrical external part (32b) and the first female abutment surface (33b),
c. a female tapered part (35b) with decreasing diameter supporting the internal thread (3b 1),
d. a second female abutment surface (36b),

9. The insulated tubular assembly (1) according to claim **8**, wherein the first female abutment surface (33b) is perpendicular to the axis A of the insulated tubular assembly (1) and faces the first male abutment surface (33a) in made-up state.

10. The insulated tubular assembly (1) according to claim **8** or **9**, wherein the fourth weld (W4) joins the second outer tube end (22-1) to the female cylindrical external part (32b).

11. The insulated tubular assembly (1) according to anyone of claims **1** to **10**, wherein each of the external thread (3a1) and the internal thread (3b1) taper to create a clockwise taper angle θ from 1 to 5 degrees with the axis (A), preferably between 2 and 4 degrees, and most optimally between 3 and 4 degrees.

12. The insulated tubular assembly (1) according to anyone of claims **1** to **11**, wherein each of the external thread (3a1) and the internal thread (3b1) comprises a stab flank (4S) with an anti-clockwise angle (β) ranging from 40° to 60°, preferably between 45° and 55°, and most optimally between 48° and 53°, relative to a perpendicular to the axis (A).

13. The insulated tubular assembly (1) according to anyone of claims **1** to **12**, wherein each of the external thread (3a1) and the internal thread (3b1) comprises a load flank (4L) with a clockwise angle (α) ranging from 1° to 8°, preferably between 2° and 6° and most optimally between 3° and 5°, with reference to a perpendicular to the axis (A).

14. The insulated tubular assembly (1) according to anyone of claims **1** to **13**, wherein each of the external thread (3a1) and the internal thread (3b1) has 5 to 10 threads per inch, with a preferable range being 6 to 8 threads per inch.

15. The insulated tubular assembly (1) according to anyone of claims **1** to **14**, wherein the external thread (3a1) has a thread crest (4C) radially positioned beyond the inner tube (11,12) outer diameter.

16. Process to obtain an insulated tubing segment according to anyone of claims **1** to **15** comprising the following successive steps:
∘ welding the inner tube (11,12) to the male component (3a) on one side and to the female component (3b) on the other side, to obtain an inner assembly (6),
∘ inserting said inner assembly (6) into the outer tube (21,22),
∘ welding the outer tube (21,22) to the male component (3a) on one side and to the female component (3b) on the other side,
∘ pulling vacuum through a hole to create the vacuumed space (5) between said inner (11,12,) and outer tubes (21, 22).

## Amended claims

### Amended claims in accordance with Rule 137(2) EPC.

1. An insulated tubular assembly (1) made of several sequentially joined insulated tubing segments aligned along an axis (A), with each tubing segment comprising:
• two opposing ends (E1 E2),
• an inner tube (11,12) defining a passageway (F) for fluid flow, each inner tube (11,12) comprising first and second inner tube ends (11-1, 12-1),
• an outer tube (21,22) arranged concentrically around the inner tube (11,12), forming a vacuumed space (5) between said inner (11,12,) and outer tubes (21, 22), each outer tube (21,22) comprising first and second outer tube ends (21-1, 22-1),
an opposing end (E1) of the two opposing ends (E1, E2) of a tubing segment being connected by a first spool (301) and the other opposing end (E2) of the two opposing ends (E1, E2) of said tubing segment being connected by a second spool (302), each spools (301, 302) comprising a male component (3a) with an external thread (3a1) threadedly engaged with a female component (3b) comprising a matching internal thread (3b1), the insulated tubular assembly (1) being such that:
• the male component (3a) is connected on one side by a primary weld (W1) to the first inner tube end (11-1) and on the other side by a secondary weld (W2) to the first outer tube end (21-1), sealing the vacuumed space (5),
• the female component (3b) is connected on one side by a third weld (W3) to the second inner tube end (12-1) and on the other side by a fourth weld (W4) to the second outer tube end (22-1), sealing the vacuumed space (5), the axial distance (d1) between the secondary weld (W2) and the fourth weld (W4) being shorter than the axial distance (d2) between the primary weld (W1) and the third weld (W3).

2. The insulated tubular assembly (1) according to claim **1,** wherein, the axial distance (d1) between the secondary weld (W2) and the fourth weld (W4) is shorter than the axial length (d3) of the external or internal thread (3a1, 3b1).

3. The insulated tubular assembly (1) according to claim 1 or claim 2, wherein the spool (301,302) and the inner tube (11,12) have substantially equal inner diameters.

4. The insulated tubular assembly (1) according to anyone of claims 1 to 3, wherein the spool (301,302) has a maximal outer diameter substantially equal to the outer tube (21,22) inner diameter.

5. The insulated tubular assembly (1) according to anyone of claims 1 to 4, wherein the male component (3a) has an external surface comprising the following successive parts:
a. a first male frustoconical part (31a) with expanding diameter,
b. a first male cylindrical part (32a),
c. a first male abutment surface (33a),
d. a second male cylindrical part (34a)
e. a male threaded tapered part (35a) with decreasing diameter and comprising the external thread (3a1),
f. a second male abutment surface (36a),

6. The insulated tubular assembly (1) according to claim 5, wherein the first male abutment surface (33a) is perpendicular to the axis A of the insulated tubular assembly (1).

7. The insulated tubular assembly (1) according to claim 5 or 6, wherein the secondary weld (W2) joins the first outer tube end (21-1) to the first male cylindrical part (32a).

8. The insulated tubular assembly (1) according to anyone of claims 1 to 7, wherein the female component (3b) comprises a cylindrical external part (32b) and an internal surface comprising the following successive parts:
a. a first female abutment surface (33b) proximal to the female cylindrical external part (32b),
b. a first inner female cylindrical part (34b) forming a tubular shape with the female cylindrical external part (32b) and the first female abutment surface (33b),
c. a female tapered part (35b) with decreasing diameter supporting the internal thread (3b1),
d. a second female abutment surface (36b),

9. The insulated tubular assembly (1) according to claim **8,** wherein the first female abutment surface (33b) is perpendicular to the axis A of the insulated tubular assembly (1) and faces the first male abutment surface (33a) in made-up state.

10. The insulated tubular assembly (1) according to claim **8** or **9,** wherein the fourth weld (W4) joins the second outer tube end (22-1) to the female cylindrical external part (32b).

11. The insulated tubular assembly (1) according to anyone of claims **1** to **10,** wherein each of the external thread (3a1) and the internal thread (3b1) taper to create a clockwise taper angle θ from 1 to 5 degrees with the axis (A), preferably between 2 and 4 degrees, and most optimally between 3 and 4 degrees.

12. The insulated tubular assembly (1) according to anyone of claims **1** to **11,** wherein each of the external thread (3a1) and the internal thread (3b1) comprises a stab flank (4S) with an anti-clockwise angle (β) ranging from 40° to 60°, preferably between 45° and 55°, and most optimally between 48° and 53°, relative to a perpendicular to the axis (A).

13. The insulated tubular assembly (1) according to anyone of claims **1** to **12,** wherein each of the external thread (3a1) and the internal thread (3b1) comprises a load flank (4L) with a clockwise angle (α) ranging from 1° to 8°, preferably between 2° and 6° and most optimally between 3° and 5°, with reference to a perpendicular to the axis (A).

14. The insulated tubular assembly (1) according to anyone of claims **1** to **13,** wherein each of the external thread (3a1) and the internal thread (3b1) has 5 to 10 threads per inch, with a preferable range being 6 to 8 threads per inch.

15. The insulated tubular assembly (1) according to anyone of claims **1** to **14,** wherein the external thread (3a1) has a thread crest (4C) radially positioned beyond the inner tube (11,12) outer diameter.

16. Process to obtain an insulated tubing segment according to anyone of claims **1** to **15** comprising the following successive steps:
o welding the inner tube (11,12) to the male component (3a) on one side and to the female component (3b) on the other side, to obtain an inner assembly (6),
o inserting said inner assembly (6) into the outer tube (21,22),
o welding the outer tube (21,22) to the male component (3a) on one side and to the female component (3b) on the other side,
o pulling vacuum through a hole to create the vacuumed space (5) between said inner (11,12,) and outer tubes (21, 22).
